# EUROPEAN PATENT APPLICATION

(11) **EP 3 425 455 A1**
(43) Date of publication of application: **09.01.2019**
(21) Application number: 18177249.2
(22) Date of filing: 12.06.2018
(51) Int. Cl.: G03G 15/00

(54) **POWER OFF APPARATUS**

(30) Priority: 07.07.2017 JP 2017133829
(71) Applicant: Toshiba Tec Kabushiki Kaisha, Shinagawa-ku Tokyo 141-0032 (JP); Kabushiki Kaisha Toshiba, Minato-ku Tokyo (JP)
(72) Inventor: Miyata, Shungo, Tokyo, 141-8562 (JP)
(74) Representative: Hoffmann Eitle

(57) **Abstract**

A power management apparatus (5) attached to a first image forming apparatus (1A) configured to switch a power supply switch (14) to an OFF state, includes an energy storage device (57) configured to supply electric power to the apparatus, a communication interface (53) configured to receive a state of a second image forming apparatus (1B, 1C) from a communication device (5B, 5C) attached to the second image forming apparatus, and a mechanical switch (54) configured to physically displace a power supply switch of the first image forming apparatus and turn a power supply of the first image forming apparatus ON and OFF, based on the state of the second image forming apparatus.

## Description

### CROSS-REFERENCE TO RELATED APPLICATION

This application is based upon and claims the benefit of priority from Japanese Patent Application No. 2017-133829, filed July 7, 2017, the entire contents of which are incorporated herein by reference.

### FIELD

Embodiments described herein relate generally to a technology for automatically turning off a power supply of an image forming apparatus.

### BACKGROUND

Conventionally, there is an image forming apparatus which is provided with an illuminance sensor which turns off a power supply if the illuminance detected by it is low (for example, Japanese unexamined patent publication application No. 2011-197257) . In this apparatus, it is possible to prevent the MFP from continuing to draw power where one has forgotten to turn off the power supply.

### SUMMARY

One of the objects of the present invention is to improve prior art techniques and overcome at least some of the prior art problems as for instance above illustrated.

According to a first aspect of the present invention, it is provided a power management apparatus attached to a first image forming apparatus configured to switch a power supply switch to an OFF state, comprising:
an energy storage device configured to supply electric power to the apparatus;
a communication interface configured to receive a state of a second image forming apparatus from a communication device attached to the second image forming apparatus; and
a mechanical switch configured to physically displace a power supply switch of the first image forming apparatus and turn a power supply of the first image forming apparatus ON and OFF based on the state of the second image forming apparatus.

Optionally, in the power management apparatus according to the first aspect, the communication device includes an illuminance sensor for detecting ambient illuminance, and
the communication interface receives a detection result of the illuminance sensor as the state of the second image forming apparatus from the communication device.

Optionally, in the power management apparatus according to the first aspect, the communication device acquires, as a state of the second image forming apparatus, a power control mode of the second image forming apparatus, and
the communication interface receives the power control mode of the second image forming apparatus as the state of the second image forming apparatus from the communication device.

Optionally, in the power management apparatus according to the first aspect, the communication device acquires the power control mode of the second image forming apparatus, and
the communication interface receives the power control mode of the second image forming apparatus as the state of the second image forming apparatus from the communication device.

Optionally, the power management apparatus according to the first aspect further comprises:
a controller configured to drive the mechanical switch to switch the power supply to the OFF state based on the state of the second image forming apparatus.

Optionally, in the power management apparatus according to the first aspect, where
the communication device includes an illuminance sensor for detecting ambient illuminance at at least one additional image forming apparatus, and acquires a power control mode of the at least one additional image forming apparatus, and
the controller receives the detection result of the illuminance sensor as the state of the at least one additional image forming apparatus, and the power control mode of the second image forming apparatuses, from the communication device via the communication interface, determines whether the power supply of the at least one additional image forming apparatus is in the OFF state based on the period of time of the at least one additional image forming apparatus has been in a power saving and determines whether the at least one additional image forming apparatus is powered off based on the detection result of the illuminance sensor, and drives the mechanical switch to switch the power supply switch to the power supply OFF position if it is determined that a specified number or more the at least one additional image forming apparatus are powered off.

According to a second aspect of the present invention, it is provided an apparatus configured to switch the power supply state thereof between an ON state and an OFF state depending on power supply states of additional apparatuses and the illumination conditions at the location of the additional apparatuses, comprising:
an energy storage;
a power supply section including a power supply switch settable in a power supply ON condition and a power supply OFF condition;
a communication interface configured to receive power supply state and illumination state information concerning the additional apparatuses;
a controller; and
a mechanical switch configured to physically interface with the power supply switch and thereby switch the power supply of the apparatus to the OFF state under the control of the controller based on the power supply state and illumination state information concerning the additional apparatuses.

Optionally, the apparatus according to the second aspect of the invention further comprises a condition setting section including user settable condition values related to the power supply state and illumination state information of the additional apparatuses.

Optionally, in the apparatus according to the second aspect of the invention, the power supply states of the additional apparatuses include an ON state, a sleep state, and an OFF state, and the settable condition values include a period of time that an additional apparatus is in at least one of the sleep state and the OFF state.

Optionally, in the apparatus according to the second aspect of the invention, the controller is configured to:
receive, through the communication interface, the power supply state and illumination state information concerning at least one additional apparatus;
compare the power supply state and illumination state information concerning the at least one additional apparatus to the user settable condition values; and
if the user selectable condition values have been met by the at least one additional apparatus, control the operation of the mechanical switch to change the operating state of the apparatus to a state other that the ON state.

Optionally, in the apparatus according to the second aspect of the invention, the state information includes a period of time that the at least one additional apparatus has been in a sleep or an OFF state.

Optionally, in the apparatus according to the second aspect of the invention, the state information includes a period of time that the area of the at least one additional apparatus has been illuminated at a specified illumination level.

Optionally, in the apparatus according to the second aspect of the invention, if the user selectable condition values have been met by at least two additional apparatuses, the controller is further configured to control the operation of the mechanical switch to change the operating state of the apparatus to a state other that the ON state.

Optionally, in the apparatus according to the second aspect of the invention, the mechanical switch is operable under both the control of the controller and by direct user input thereto.

According to a third aspect of the present invention, it is provided an apparatus for switching an image forming apparatus from an on state to an OFF state based, at least in part, on the state of at least one additional image forming apparatus, comprising:
a power supply section including a power supply switch settable in a power supply ON state wherein power is supplied to the image forming apparatus for operation thereof and a power supply OFF state wherein power is prevented from reaching at least a portion of the operational components of the image forming apparatus;
a communication interface configured to receive the state of the power supply switch, and ambient illumination state information, of at least one additional image forming apparatus;
a controller configured to:
   receive the state of the power supply switch and ambient illumination state information of the at least one additional image forming apparatus; and
   compare that information to user selectable settings; and
a mechanical switch configured to physically interface with the power supply switch and thereby switch the power supply of the apparatus to the OFF state under the control of the controller based on the power supply switch and ambient illumination state information concerning the additional apparatuses.

Optionally, in the apparatus according to the third aspect of the invention, the state information includes a period of time that the at least one additional apparatus has been in a sleep state or an OFF state.

Optionally, in the apparatus according to the third aspect of the invention, the state information includes a period of time that the area of the at least one additional apparatus has been illuminated at a specified illumination level.

Optionally, in the apparatus according to the third aspect of the invention, where if the user selectable condition values have been met by at least two additional apparatuses, the controller is further configured to control the operation of the mechanical switch to change the operating state of the apparatus to a state other that the ON state.

Optionally, in the apparatus according to the third aspect of the invention, the mechanical switch is operable under both the control of the controller and by direct user input thereto.

### DESCRIPTION OF THE DRAWINGS

Fig. 1 is a block diagram illustrating the structures of a plurality of MFPs and IOT modules;
Fig. 2 is a diagram illustrating a power supply switch and the IOT module;
Fig. 3 is a diagram illustrating the IOT module at the time of turning off the power supply switch;
Fig. 4 is a diagram illustrating a setting screen for turning off the power supply according to detected illuminance;
Fig. 5 is a flowchart illustrating a control processing of a mechanical switch by the IOT module;
Fig. 6 is a diagram illustrating a state of illumination for the MFP;
Fig. 7 is a setting screen of a power supply condition; and
Fig. 8 is a setting screen of illumination conditions.

### DETAILED DESCRIPTION

Generally, in accordance with an embodiment, a power management apparatus attached to a first image forming apparatus configured to switch a power supply switch to an OFF state, includes an energy storage device configured to supply electric power to the apparatus, a communication interface configured to receive a state of a second image forming apparatus from a communication device attached to the second image forming apparatus, and a mechanical switch configured to physically displace a power supply switch of the first image forming apparatus and thereby turn a power supply of the first image forming apparatus to the OFF state. Hereinafter, an embodiment is described with reference to the accompanying drawings.

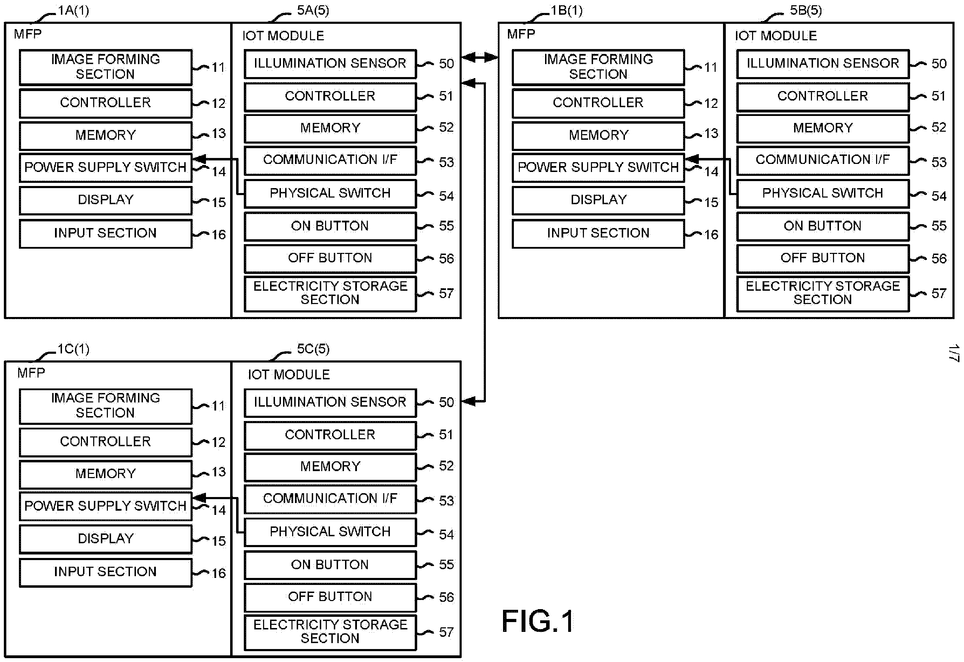

Fig. 1 is a block diagram illustrating the constitutions of a plurality of MFPs 1 (Multi-Function Peripheral) and IOT modules 5 (Internet of Things Module).

A plurality of MFPs 1 are installed on the same floor of an office, a building, etc. The MFPs 1 can each execute a plurality of functions such as printing, copying, scanning, FAXing and the like. The MFPs 1 include an image forming section 11, a controller 12, a memory 13, a power supply switch 14, a display 15, and an input section 16.

The image forming section 11 forms an image on a sheet. The image forming section 11 forms a latent image on a photoconductor with a laser, and develops the latent image with a toner to form a toner image on the photoconductor. The image forming section 11 transfers the toner image on the photoconductor to the sheet, and fixes the toner image on the sheet by heating the sheet with a fixing device. The image forming section 11 may eject ink from a head to form an image on the sheet. The MFP 1 includes a scanner (not shown) that reads an image on a sheet. The MFP 1 has a communication I/F (Interface) (not shown) capable of communicating with an external terminal. The MFPs 1 can send the read image data by FAX or Email, or form the image on the sheet.

The controller 12 controls the operation of its MFP 1. The controller 12 reads programs in the memory 13 and executes various processing. The display 15 displays an image. The input section 16 is a touch panel, a physical key, or the like, and receives an input from a user.

The controller 12 has a ready mode and a sleep mode (power saving mode) as power control modes other than the execution of a job. In the ready mode, the controller 12 maintains the temperature of the fixing device at a lower temperature than that needed at the time the job is executed, and enables the job to be executed quickly. In the sleep mode, the controller 12 stops power supply to the fixing device and supplies power only to the minimum elements necessary for a quick return of the MFP to the ready mode or a quick execution of a job, such as the controller 12 and the touch panel. In the sleep mode, it is possible to save more power than in the ready mode. The controller 12 shifts from the ready mode to the sleep mode if a condition such as the ready mode of the MFP 1 continues for a predetermined time, or the like, is satisfied.

An IOT module 5 is attached to an MFP 1 in the vicinity of the power supply switch 14 thereof. The IOT module 5 includes an illumination sensor 50, a controller 51, a memory 52, a communication interface (I/F) 53, a mechanical switch 54, an ON button 55, an OFF button 56, and an electricity storage section 57.

The electricity storage section 57 is, for example, a battery or other energy storage device and it supplies electric power to each section of the IOT module 5. Even if the power supply of the MFP 1 is turned off, the IOT module 5 can operate independently because it has the electricity storage section 57.

The illuminance sensor 50 detects the illuminance, i.e., presence or absence of light, or the intensity thereof, of the vicinity of the IOT module 5, in other words, detects the illuminance of the vicinity of the MFP 1 to which the IOT module 5 is attached.

The controller 51 reads a program in the memory 52 and executes various processing.

The controller 51 communicates with the MFP 1 to which the IOT module 5 is attached, receives the power control mode (the state of the MFP 1) of the MFP 1, and updates the power control mode of the MFP 1. The controller 51 recognizes an ON/OFF state of the power supply of the MFP 1 based on communication with the MFP 1 or whether the controller 51 can communicate with the MFP 1.

The communication I/F 53 is used for performing hard wired or wireless communication with an IOT module 5 attached to an MFP 1 different from the MFP 1 to which the corresponding IOT module 5 is attached. The communication I/F 53 may be connected to another IOT module 5 via a server, or may directly communicate with another IOT module 5 via ad hoc mode or the like without the server. The controller 51 receives the power control mode of an MFP 1 to which another IOT module 5 is attached, ON/OFF status of the power supply of the other MFP 1, and the detected illuminance by the illuminance sensor 50 from the other IOT module 5 via the communication I/F 53.

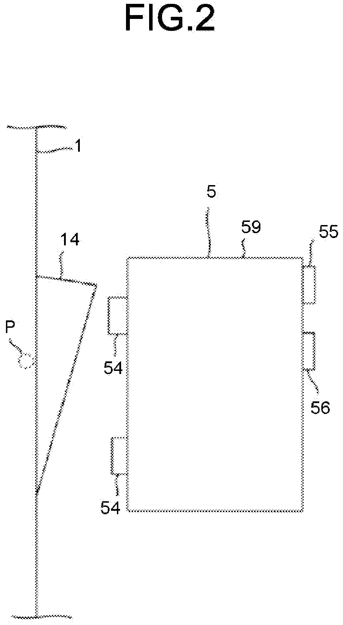

Fig. 2 is a diagram illustrating the power supply switch 14 and the IOT module 5.

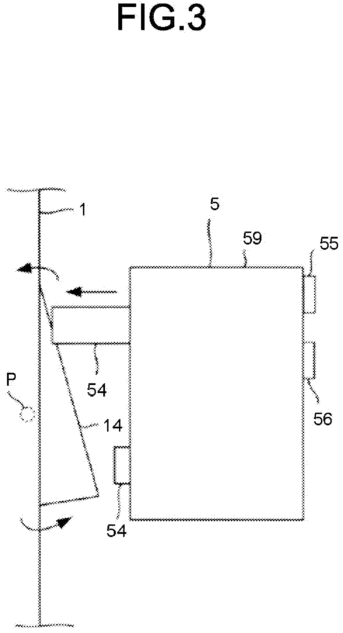

The power supply switch 14 is, for example, arranged at the upper part of a side surface of the MFP 1 and switches the power supply to the MFP 1 between power on and power off states. In the present embodiment, the power supply switch 14 is a rocker switch, and it rotates about a fulcrum P located at the center thereof in the vertical direction in Fig. 2. The power supply switch 14 turns on the power supply to the MFP 1 in a state in which the lower side thereof is pressed, and turns off the power supply to the MFP 1 in a state in which the upper side thereof is pressed (refer to Fig. 3).

The mechanical switches 54 of the IOT module 5 are provided at a position facing the lower side (ON side) of the power supply switch 14 and a position facing the upper side (OFF side), respectively. A mechanical switch 54 physically contacts the power supply switch 14 to displace the power supply switch 14 and turns ON and OFF the power supply of the MFP 1. In the present embodiment, each mechanical switch 54 has a bar shape, and each mechanical switch 54 can move back and forth toward and away from the power supply switch 14.Each mechanical switch 54 is normally located at a home, i.e., retracted, position in Fig. 2 and most of each mechanical switch 54 is accommodated within a case 59 of the IOT module 5.

Fig. 3 is a diagram illustrating the IOT module 5 at the time of turning the power supply switch 14 to the off position.

At the time of switching of the power supply switch 14, the controller 51 advances the corresponding mechanical switch 54 toward the power supply switch 14 to press the power supply switch 14. For example, as shown in Fig. 3, the controller 51 advances the upper (OFF side) mechanical switch 54 toward the power supply switch 14 when switching the power supply switch 14 from the ON to the OFF state. As a result, the controller 51, by controlling the position of the mechanical switches 54, rotates the mechanical switch 54 about the fulcrum thereof to switch the power supply switch 14 (power supply of the MFP 1) from the ON to the OFF state. Thereafter, the controller 51 moves the upper mechanical switch 54 back to the home position in Fig. 2 at which the upper mechanical switch 54 is mostly accommodated within the case 59.

Since the IOT module 5 covers the power supply switch 14, there is a possibility that it is difficult for the user to operate the power supply switch 14. Therefore, in the case 59 of the IOT module 5, an ON button 55 and an OFF button 56 are arranged. If the ON button 55 is pressed, the controller 51 drives the lower mechanical switch 54 to rotate the power supply switch 14 about the fulcrum to position it in the ON state, and if the OFF button 56 is pressed, the controller 51 drives the upper mechanical switch 54 to rotate about the fulcrum to position the power supply switch 14 in the OFF state.

The power supply switch 14 of the MFP 1 may be a button, a toggle switch or a slide switch, and it may use any mode. The mechanical switch 54 of the IOT module 5 may take any mode as long as it can switch the power supply switch 14 between the ON and OFF states.

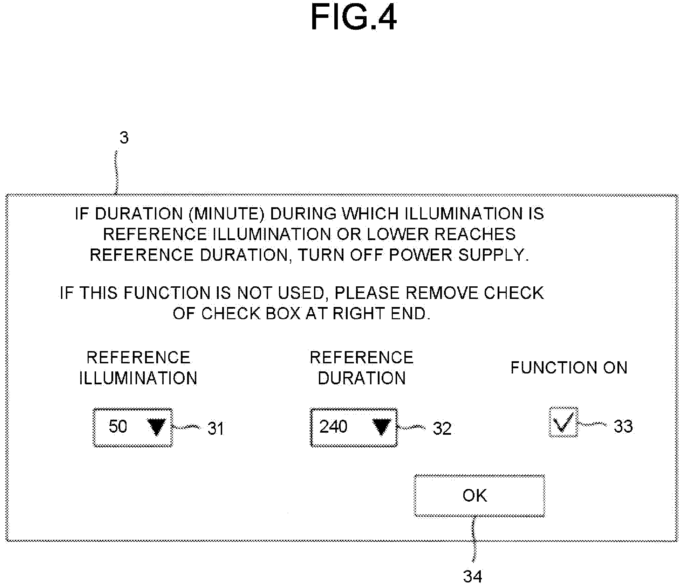

Fig. 4 is a diagram illustrating a setting screen 3 for turning off the power supply according to the detected illuminance.

The IOT module 5 drives the mechanical switch 54 to turn off the power supply of the MFP 1 if a period of time over which the illuminance detected by the illuminance sensor 50 is equal to or less than a reference illuminance value reaches a reference period of time. The setting of the reference illuminance and the reference period of time can be changed from a default (pre-set) setting by displaying the setting screen 3 on the display 15 of the MFP 1. The setting screen 3 has a reference illuminance setting column 31 and a reference duration setting column 32. In the setting screen 3, there is a check box 33 that can disable the function of turning off the power supply of the MFP 1 based on the detected illuminance around the MFP 1 by removing the check in the box. By pressing the OK button 34 after the user inputs the setting, the MFP 1 stores the user input setting in the memory 52 of the IOT module 5.

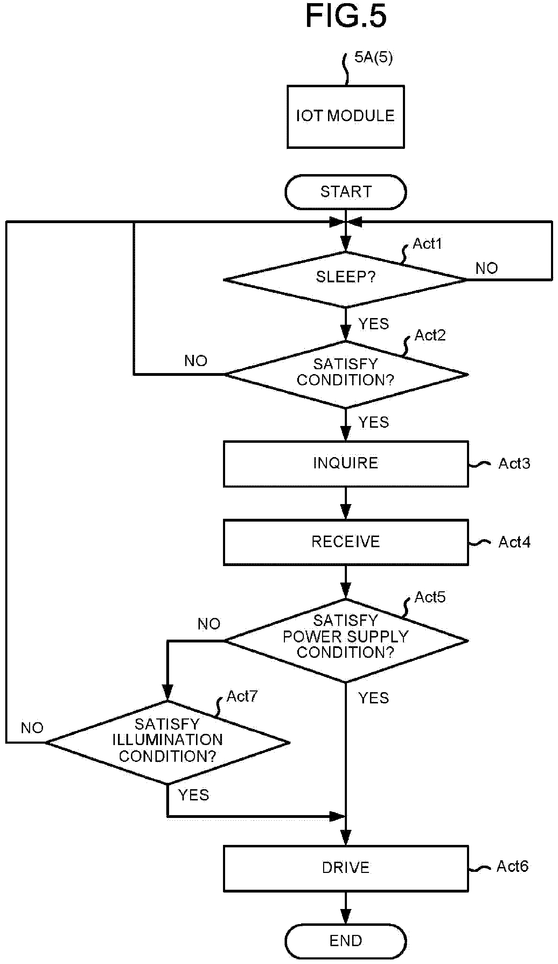

Subsequently, control processing of the mechanical switch 54 of a certain IOT module 5 is described with reference to a flowchart in Fig. 5. Hereinafter, the IOT module 5 is described as an IOT module 5A (power OFF apparatus), and the MFP 1 (first image forming apparatus) to which the IOT module 5A is attached is described as a MFP 1A in some cases. Among MFPs 1 (second image forming apparatuses) other than the MFP 1A, those with the power supply in the ON state are described as MFPs 1B, and those with power supply in the OFF state are described as MFPs 1C. The IOT module 5 attached to the MFP 1B is described as an IOT module 5B (communication device), and the IOT module 5 attached to the MFP 1C is described as an IOT module 5C (communication device) in some cases. The MFPs 1B and 1C other than MFP 1A are described as other MFPs 1B and 1C in some cases.

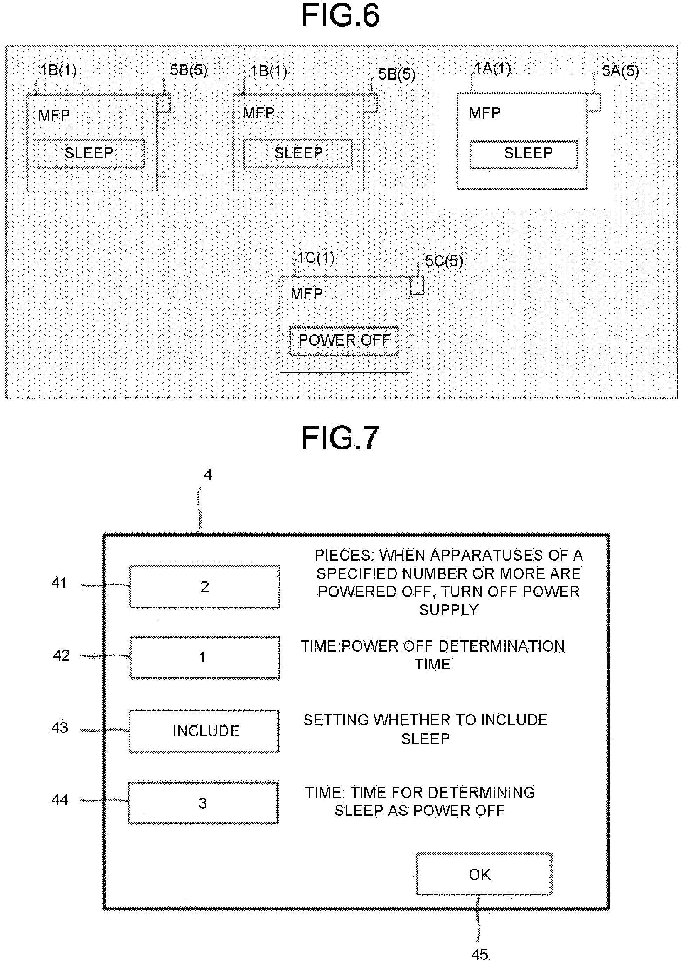

Fig. 6 is a diagram illustrating the state of illumination of the MFPs 1A, 1B and 1C.

It is assumed that the illumination of an area where the MFP 1A is provided is a result of a user forgetting to turn off the light. Since an operation of the user is not received by MFP1A for a predetermined time, MFP 1A shifts to the sleep mode. The illumination of the area where the MFPs 1B and 1C are located is turned off. Since an operation of the user is not received by the MFP1B for a predetermined time, the MFP 1B shifts to the sleep mode. The power supply of the MFP 1C is turned off.

The following control processing is executed by the IOT module 5A attached to the MFP 1A in the illuminated area. Each processing is executed by reading a program in the memory 52 by the controller 51.

The IOT module 5A (controller 51) counts up the period of time of the sleep mode and the period of time of the powered off condition of the MFP 1A.

If the MFP 1A is in the sleep mode (Yes in Act 1), conditions such as every time a specified time period elapses after the MFP 1A enters the sleep mode or is powered off are satisfied (Yes in Act 2), the IOT module 5A inquires of the other IOT modules 5B and 5C the states of the MFPs 1B and 1C (Act 3).

The conditions for making an inquiry can be appropriately set, for example, the time period for making an inquiry of every 30 minutes after the MFP 1A enters the sleep mode or is powered off can be set. The states of the MFPs 1B and 1C include a power control mode, ON/OFF of the power supply, and the detected illuminance by the illuminance sensor 50. The MFPs 1B and 1C to be inquired of can be set appropriately. The conditions for making the inquiry and the MFPs 1B and 1C to be inquired can be set in the setting screen by displaying the setting screen on the display 15 of the MFP 1A. The setting received by the MFP 1A is stored in the memory 52 of the IOT module 5A.

The IOT module 5A receives the states of the MFPs 1B and 1C from the other IOT modules 5B and 5C (Act 4).

Based on the states of the MFPs 1B and 1C, the IOT module 5A determines whether or not a power supply condition for placing the power supply in the OFF state is satisfied (Act 5) .

Fig. 7 shows a setting screen 4 of the power supply condition.

The power supply condition is that the number of apparatuses whose power supply is turned off is equal to or greater than a predetermined number of other MFPs from among the other MFPs 1B and 1C. The setting of each item of the power supply condition can be changed from a default setting by displaying the setting screen 4 on the display 15 of the MFP 1.

The setting screen 4 has a setting column 41 for receiving the input of a prescribed number of apparatuses.

The setting screen 4 includes a setting column 42 for receiving an input of a setting value (time period) to determine whether or not the MFPs 1B and 1C are powered off. The IOT module 5A does not determine whether the MFPs 1B and 1C are in the power supply OFF state if the duration of the power supply OFF state of the MFPs 1B and 1C is less than the set time.

In the setting screen 4, there is a setting column 43 for receiving an input relating to whether to include a case in which the MFPs 1B and 1C are in the sleep mode in the condition for determining whether the MFPs 1B and 1C are powered off.

The setting screen 4 has a setting column 44 for receiving an input of a setting value (time period) for determining whether the MFPs 1B and 1C are powered off if the duration of the sleep mode of the MFPs 1B and 1C is several hours or more.

The MFP 1A stores the power supply condition in the memory 52 of the IOT module 5A by a user pressing an OK button 45 after the user finishes inputting information into the setting columns 41 to 44.

In Act 5, the IOT module 5A determines whether or not the states of the MFPs 1B and 1C satisfy the power supply condition in the memory 52 (Act 5).

In Acts 3 to 5, the IOT module 5A inquires of the other IOT modules 5B and 5C the states of the MFPs 1B and 1C once every hour after the MFP 1A shifts to the sleep mode (Act 3) . Then, based on the result of the power supply condition inquiry, the IOT module 5A determines that the power supply condition is satisfied if it is determined that two or more MFPs 1B and 1C are powered OFF (refer to the setting column 41 in Fig. 7) (Yes in Act 5).

At this time, if the duration of time of the power supply OFF condition of the MFPs 1B and 1C is one hour or more according to notifications received from the IOT modules 5B and 5C every 30 minutes (based on a value of 30 minutes in the setting column 42 in Fig. 7), the IOT module 5A determines that the MFPs 1B and 1C are powered off. If the duration of the sleep mode of the MFPs 1B and 1C is three hours or more (refer to the setting columns 43 and 44 in Fig. 7) according to the notification received from the IOT modules 5B and 5C every 30 minutes, the IOT module 5A determines that the MFPs 1B and 1C are powered off.

If the IOT module 5A determines that the states of the MFPs 1B and 1C satisfy the power supply condition (Yes in Act 5), the IOT module 5A drives the mechanical switch 54 to switch the power supply of the MFP 1 to the OFF state(Act 6).

If the IOT module 5A determines that the states of the MFPs 1B and 1C do not satisfy the power supply condition (No in Act 5), the IOT module 5A determines whether or not the states of the MFPs 1B and 1C satisfy the illuminance condition (Act 7) .

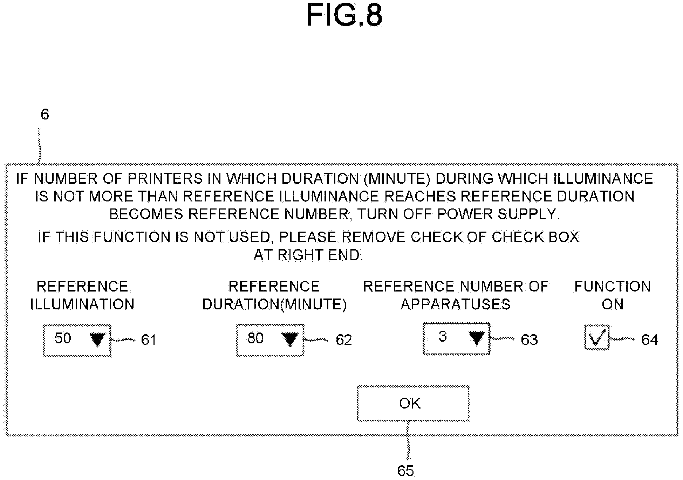

Fig. 8 shows a setting screen 6 of the illumination condition.

The IOT module 5A drives the mechanical switch 54 to turn off the power supply of the MFP 1A if the number of the MFPs 1B and 1C in which the period of time during which the illuminance is equal to or less than the reference illuminance reaches the reference duration reaches the reference number of MFPs. The setting of the reference illuminance, the reference time period, and the reference number of apparatuses (MFPs) which are illumination conditions can be changed from the default setting by displaying the setting screen 6 on the display 15 of the MFP 1A.

The setting screen 6 includes a reference illuminance setting column 61, a reference duration setting column 62, and a reference number of apparatuses setting column 63. In the setting screen 6, there is a check box 64 that can disable the function of switching the power supply to the OFF state according to the detected illuminance of other MFPs 1B and 1C by removing the check. After the user inputs the setting by pressing the OK button 65, the setting is stored in the memory 52 of the IOT module 5A.

If it is determined that the states of the MFPs 1B and 1C satisfy the illumination condition in the memory 52 (Yes in Act 7), the IOT module 5A drives the mechanical switch 54 to switch the power supply of the MFP 1A to the OFF state(Act 6).

If the MFP 1A is not in the sleep mode (No in Act 1), if it is determined that the states of the MFPs 1B and 1C do not satisfy the illuminance condition in the memory 52 (No in Act 7), or if the condition such as every time a predetermined time elapses after the MFP 1A enters the sleep mode or is powered off is satisfied (No in Act 2), the IOT module 5A returns to the processing in Act 1.

### (Modification)

In the present embodiment, the setting screens 3, 4, and 6 are displayed on the MFP 1A to receive the respective conditions by the MFP 1A. However, a display may be arranged in the IOT module 5A to display the setting screens 3, 4 and 6 on the IOT module 5A to receive the respective conditions. The IOT module 5A may receive each condition from an external terminal connected thereto.

In the present embodiment, the IOT module 5A determines whether or not each condition is satisfied based on the states of the other MFPs 1B and 1C. However, the MFP 1A may retain the respective conditions for turning off the power supply of the MFP 1A in the memory 13, and receive the states of the other MFPs 1B and 1C via the IOT module 5A. Then, the MFP 1A may refer to each condition in the memory 13 to determine whether or not each condition is satisfied, and directly drive the mechanical switch 54 of the IOT module 5A. The MFP 1A may drive the mechanical switch 54 via the controller 51 of the IOT module 5A to turn off the power supply of the MFP 1A.

The IOT module 5A simply determines whether to switch the power supply of the MFP 1A to the OFF state with reference to the set conditions by acquiring the states of the surrounding MFPs 1B and 1C and detected illuminance, and the setting conditions are not limited to those of the present embodiment.

As described in detail above, according to the technology described in this specification, it is possible to provide a technology for automatically switching the power supply of an apparatus, such as an MFP, to an OFF state, based on the states of the surrounding apparatuses.

## Claims

1. A power management apparatus attached to a first image forming apparatus configured to switch a power supply switch to an OFF state, comprising:
an energy storage device configured to supply electric power to the apparatus;
a communication interface configured to receive a state of a second image forming apparatus from a communication device attached to the second image forming apparatus; and
a mechanical switch configured to physically displace a power supply switch of the first image forming apparatus and turn a power supply of the first image forming apparatus ON and OFF based on the state of the second image forming apparatus.

2. The power management apparatus according to claim 1, wherein
the communication device includes an illuminance sensor for detecting ambient illuminance, and
the communication interface receives a detection result of the illuminance sensor as the state of the second image forming apparatus from the communication device.

3. The power management apparatus according to claim 1 or 2, wherein
the communication device acquires, as a state of the second image forming apparatus, a power control mode of the second image forming apparatus, and
the communication interface receives the power control mode of the second image forming apparatus as the state of the second image forming apparatus from the communication device.

4. The power management apparatus according to claim 2 or 3, wherein
the communication device acquires the power control mode of the second image forming apparatus, and
the communication interface receives the power control mode of the second image forming apparatus as the state of the second image forming apparatus from the communication device.

5. The power management apparatus according to any of claims 1 to 4, further comprising:
a controller configured to drive the mechanical switch to switch the power supply to the OFF state based on the state of the second image forming apparatus.

6. The power management apparatus according to claim 5, wherein
the communication device includes an illuminance sensor for detecting ambient illuminance at at least one additional image forming apparatus, and acquires a power control mode of the at least one additional image forming apparatus, and
the controller receives the detection result of the illuminance sensor as the state of the at least one additional image forming apparatus, and the power control mode of the second image forming apparatuses, from the communication device via the communication interface, determines whether the power supply of the at least one additional image forming apparatus is in the OFF state based on the period of time of the at least one additional image forming apparatus has been in a power saving and determines whether the at least one additional image forming apparatus is powered off based on the detection result of the illuminance sensor, and drives the mechanical switch to switch the power supply switch to the power supply OFF position if it is determined that a specified number or more the at least one additional image forming apparatus are powered off.

7. An apparatus configured to switch the power supply state thereof between an ON state and an OFF state depending on power supply states of additional apparatuses and the illumination conditions at the location of the additional apparatuses, comprising:
an energy storage;
a power supply section including a power supply switch settable in a power supply ON condition and a power supply OFF condition;
a communication interface configured to receive power supply state and illumination state information concerning the additional apparatuses;
a controller; and
a mechanical switch configured to physically interface with the power supply switch and thereby switch the power supply of the apparatus to the OFF state under the control of the controller based on the power supply state and illumination state information concerning the additional apparatuses.

8. The apparatus of claim 7, further comprising a condition setting section including user settable condition values related to the power supply state and illumination state information of the additional apparatuses.

9. The apparatus of claim 8, wherein the power supply states of the additional apparatuses include an ON state, a sleep state, and an OFF state, and the settable condition values include a period of time that an additional apparatus is in at least one of the sleep state and the OFF state.

10. The apparatus of claim 8 or 9, wherein the controller is configured to;
receive, through the communication interface, the power supply state and illumination state information concerning at least one additional apparatus;
compare the power supply state and illumination state information concerning the at least one additional apparatus to the user settable condition values; and
if the user selectable condition values have been met by the at least one additional apparatus, control the operation of the mechanical switch to change the operating state of the apparatus to a state other that the ON state.

11. The apparatus of claim 10, wherein the state information includes a period of time that the at least one additional apparatus has been in a sleep or an OFF state.

12. The apparatus of claim 10 or 11, wherein the state information includes a period of time that the area of the at least one additional apparatus has been illuminated at a specified illumination level.

13. The apparatus of any of claims 10 to 12, wherein if the user selectable condition values have been met by at least two additional apparatuses, the controller is further configured to control the operation of the mechanical switch to change the operating state of the apparatus to a state other that the ON state.

14. The apparatus of any of claims 10 to 13, wherein the mechanical switch is operable under both the control of the controller and by direct user input thereto.

15. An apparatus for switching an image forming apparatus from an on state to an OFF state based, at least in part, on the state of at least one additional image forming apparatus, comprising:
a power supply section including a power supply switch settable in a power supply ON state wherein power is supplied to the image forming apparatus for operation thereof and a power supply OFF state wherein power is prevented from reaching at least a portion of the operational components of the image forming apparatus;
a communication interface configured to receive the state of the power supply switch, and ambient illumination state information, of at least one additional image forming apparatus;
a controller configured to:
receive the state of the power supply switch and ambient illumination state information of the at least one additional image forming apparatus; and
compare that information to user selectable settings; and
a mechanical switch configured to physically interface with the power supply switch and thereby switch the power supply of the apparatus to the OFF state under the control of the controller based on the power supply switch and ambient illumination state information concerning the additional apparatuses.
